(19) Europäisches Patentamt
European Patent Office
Office européen des brevets

(11) Veröffentlichungsnummer: **0 011 184**
**B2**

(12) **NEUE EUROPÄISCHE PATENTSCHRIFT**

(45) Veröffentlichungstag der neuen Patentschrift: **18.05.88**

(51) Int. Cl.⁴: **C 08 F 4/52,** C 08 F 36/04

(21) Anmeldenummer: **79104244.3**

(22) Anmeldetag: **31.10.79**

(54) **Katalysator, dessen Herstellung und Verwendung zur Lösungspolymerisation von konjugierten Dienen.**

(30) Priorität: **11.11.78 DE 2848964**

(43) Veröffentlichungstag der Anmeldung:
**28.05.80 Patentblatt 80/11**

(45) Bekanntmachung des Hinweises auf die Patenterteilung:
**11.05.83 Patentblatt 83/19**

(45) Bekanntmachung des Hinweises auf die Entscheidung über den Einspruch:
**18.05.88 Patentblatt 88/20**

(84) Benannte Vertragsstaaten:
**BE DE FR GB IT NL**

(56) Entgegenhaltungen:
**EP-A-0 007 027**
**DE-A-1 812 935**
**DE-B-1 302 264**
**GB-A-1 294 725**
**US-A-3 794 604**
**US-A-4 125 549**

**EXXON CHEMICALS: "Neo Acids Properties, Chemistry and Application"**
**Kirk-Othmer, Encyclopedia of Chemical Technology, 3. Aufl., Band 4 (7); S. 863 u. 868**
**M.C. Throckmorton: "Comparison of Cerium and Other Transition Metal Catalyst Systems, for Preparing Very High cis-14-Polybutadiene" KAUTSCHUK UND GUMMI KUNSTSTOFFE, 22. Jahrgang Nr. 6/1969, S. 293-297**

**Die Akte enthält technische Angaben, die nach**

(73) Patentinhaber: **BAYER AG, Konzernverwaltung RP Patentabteilung, D-5090 Leverkusen 1 Bayerwerk (DE)**

(72) Erfinder: **Sylvester, Gerd, Dr., Im Buchenhain 1, D-5090 Leverkusen 1 (DE)**
Erfinder: **Witte, Josef, Dr., Haferkamp 10, D-5000 Köln 80 (DE)**
Erfinder: **Marwede, Günter, Dr., Am Portzenacker 24, D-5000 Köln 80 (DE)**

(56) Entgegenhaltungen: (Fortsetzung)
**dem Eingang der Anmeldung eingereicht wurden und die nicht in dieser Patentschrift enthalten sind.**

EP 0 011 184 B2

LIBER, STOCKHOLM 1988

**Beschreibung**

Katalysator, dessen Herstellung und Verwendung zur Lösungspolymerisation von konjugierten Dienen

Die Erfindung betrifft einen neuen homogenen Katalysator, dessen Herstellung sowie seine Verwendung zur Polymerisation von konjugierten Dienen in Lösung zu Polymerisaten mit guter Konfektionsklebrigkeit.

Polybutadien mit einem hohen Anteil an cis-1,4-Einheiten wird bereits seit längerer Zeit in großtechnischem Maßstab produziert und für die Herstellung von Reifen und anderen Gummiwaren verwendet. Die dabei eingesetzten metallorganischen Mischkatalysatoren enthalten als Übergangsmetallkomponente Titan-, Kobalt- oder Nickelverbindungen. Gegenüber Naturkautschuk besitzt das mit diesen Katalysatoren hergestellte Polybutadien u. a. den Nachteil einer geringen Konfektionsklebrigkeit.

Es sind zwar Katalysatoren zur Herstellung von Polybutadien mit einer verbesserten Konfektionsklebrigkeit bekannt, doch weisen diese andere gravierende Nachteile auf, die eine technische Anwendung verhindert haben.

So wird z. B. in einer Veröffentlichung, erschienen in "Kautschuk und Gummi, Kunststoffe", 22. Jahrgang. Nr. 6/1969, Seite 293 ff., ein Katalysator beschrieben, mittels dessen Polybutadien hergestellt werden kann, welches eine gute Konfektionsklebrigkeit besitzt. Das dort beschriebene Katalysatorsystem besteht aus

1. einem Aluminiumalkyl oder Alkylaluminiumhydrid,
2. Ceroctoat und
3. einer Halogenidverbindung.

Die verwendete Cer-Verbindung hat den Nachteil, daß sie in den zur Herstellung des Katalysators und zur Polymerisation von Butadien geeigneten Lösungsmitteln sehr wenig löslich ist. Ebenso bildet der fertige Katalysator keine homogene Lösung. Es ist daher schwierig, sowohl die Cer-Verbindung als auch den daraus hergestellten Katalysator in einem technischen Verfahren präzise zu dosieren, was für die gleichmäßige Reaktionsführung und gleichbleibende Produkteigenschaften von großer Bedeutung ist. Außerdem neigen heterogene Katalysatoren bei der Lösungspolymerisation von Dienen in starkem Maße zu unerwünschter Gelbildung, die zur Verkrustung von Reaktionsgefäßen und Rührern sowie zum Verstopfen von Rohrleitungen führen kann, so daß der Produktionsprozeß in einer technischen Anlage erheblich gestört werden würde.

In der gleichen Publikation wird auf Seite 297, 2. Spalte, 3. Zeile erwähnt, daß wahrscheinlich auch andere Metalle der Seltenen Erden Katalysatoren mit ähnlichen Eigenschaften bilden.

Die Verwendung von Verbindungen der Seltenen Erden als Bestandteil von metallorganischen Mischkatalysatoren für Polymerisationsreaktionen ist tatsächlich seit langem bekannt. So wird z. B. in der US-Patentschrift 3 118 864 u. a. ein Katalysator für die Polymerisation von Butadien, Isopren oder Chloropren beansprucht, der durch Reaktion von einem Ester oder Halogenid des Cers mit einer metallorganischen Verbindung, die wenigstens eine Metall-Kohlenstoffbindung besitzt, gebildet wird.

Ein anderer Katalysator, der für die stereospezifische Polymerisation von Dienen geeignet ist, wird in der Deutschen Auslegeschrift 1 302 264 beschrieben. Er besteht aus

a) einem Chelatohalogenid eines Metalls der Gruppe IIIB des Periodensystems der Elemente und
b) einem Aluminiumtrialkyl oder Alkylaluminiumhydrid.

Erwähnt werden in dieser Patentschrift auch solche Katalysatoren, die aus

a) einem löslichen Chelat eines Metalls der Grupe IIIB,
b) einem Alkylaluminiumhalogenid und
c) einem Aluminiumtrialkyl oder Alkylaluminiumhydrid hergestellt werden.

Alle dort beschriebenen Katalysatoren besitzan ebenfalls die bereits geschilderten Nachteile: sie enthalten Feststoffe, die sowohl im Monomeren als auch in solchen Lösungsmitteln, die für eine Polymerisation von Dienen geeignet sind, nicht gelöst werden.

In dieser Schrift wird daher auch darauf hingewiesen (Spalte 7, Zeilen 16 bis 20), daß bei der Polymerisation in organischen Lösungsmitteln das Polymere, "in gequollenem, zusammengeballten Zustand", anfällt.

Derartige Produkte besitzen keine guten kautschuktechnologischen Eigenschaften, so daß mit diesen Katalysatoren die Polymerisation in Masse bevorzugt wird. Für ein großtechnisches Verfahren ist jedoch die Verwendung eines inerten Lösungsmittels erwünscht, damit die bei der Polymerisation freiwerdende Wärme besser abgeführt werden kann.

Weiterhin beschreibt die EP-A1-7 027 einen Katalysator, der zur Polymerisation von konjungierten Dienen eingesetzt werden kann, und dessen Komponenten bestehen aus einem Carboxylat der Seltenen Erden, einem Aluminiumalkyl und einer Lewis-Säure. Allerdings ist dessen Komponente A ein Umsetzungsprodukt eines Carboxylat der Seltenen Erden der unten beschriebenen Formel 1, wobei die Summe aller C-Atome in den Substituenten 6 bis 19 beträgt, mit einer Teilmenge von Aluminiumtrialkyl.

Eine Aufgabe der Erfindung besteht daher darin, einen Katalysator für die Polymerisation von Butadien bereitzustellen, der in dem verwendeten Lösungsmittel völlig löslich ist, und durch den Polybutadien mit guten kautschuktechnologischen Eigenschaften, insbesondere hoher Konfektionsklebrigkeit, hergestellt werden kann.

Eine weitere der Erfindung zugrundeliegende Aufgabe besteht darin, daß sämtliche der Polymerisationslösung zugefügten Katalysatorkomponenten in einem inerten Lösungsmittel lösbar sein müssen.

Eine weitere Aufgabe der Erfindung besteht darin, daß der verwendete Katalysator bereits in geringen

Mengen eine sehr hohe Aktivität für die Polymerisation von Butadien besitzen sollte.

Es wurden nun bestimmte, für die Polymerisation von Butadien geeignete Katalysatoren gefunden. die die beschriebenen Nachteile nicht aufweisen und die der Erfindung zugrunde liegenden Aufgaben lösen.

Ein Gegenstand der Erfindung ist somit ein in Lösungmitteln für die Dienpolymerisation homogen löslicher Katalysator, erhalten durch Zugabe und Mischen der Katalysatorbestandteile zum Polymerisationsansatz bestehend aus

A) einem Carboxylat der Seltenen Erden der Formel

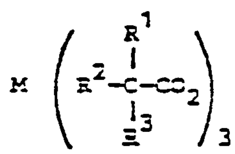

(1)

B) einem Aluminiumtrialkyl $AlR_3^4$ und/oder: $R_2^4$ AlH

C) einer weiteren Lewissäure,

wobei

M ein dreiwertiges Element der Seltenen Erden mit den Ordnungszahlen 57 bis 71,

$R^1$, $R^2$ und $R^3$ gleich oder verschieden, Alkylreste mit 1 bis 10 Kohlenstoffatomen, wobei die Summe der Kohlenstoffatome von $R^1$, $R^2$ und $R^3$ 6 bis 20 C-Atome darstellt, und

$R^4$ einen geradkettigen oder verzweigten Alkylrest mit 1 bis 10 Kohlenstoffatomen bedeuten, mit der Ausnahme eines Katalysators, der ein Umsetzungsprodukt der Komponente A der Formel 1, wobei die Summe aller C-Atome in den Substituenten 5 bis 19 beträgt, mit einer Teilmenge der Komponente B enthält, wenn B die Bedeutung Aluminiumtrialkyl hat.

Die Verbindungen A, zusammengesetzt aus dreiwertigen Kationen der Seltenen Erden und dem Säurerest von tertiären Carbonsäuren der Formel

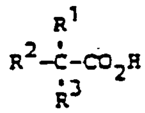

sind in Kohlenwasserstoffen gut löslich.

Dieser Befund ist überraschend, da andere Carboxylate der Seltenen Erden, z. B. die Acetate, Propionate, Hexancarboxylate, Triäthylacetate, 2-Methylhexancarboxylate, 2-Äthylhexancarboxylate, Palmitrate, Stearate, Benzoate und Phenylacetate, in unpolaren organischen Solventien nur sehr wenig löslich sind.

In der Komponente A bedeutet M ein dreiwertiges Element der Seltenen Erden mit den im Periodensystem gekennzeichneten Ordnungszahlen 57 bis 71. Bevorzugt werden solche Verbindungen, in denen M Lanthan, Cer, Praseodym oder Neodym bzw. ein Gemisch von Elementen der Seltenen Erden, welches mindestens eines der Elemente Lanthan, Cer, Praseodym oder Neodym zu wenigstens 10 Gew. -% enthält, bedeutet.

Besonders bevorzugt werden Verbindungen, in denen M Lanthan oder Neodym bzw. ein Gemisch von Seltenen Erden, welches Lanthan oder Neodym zu mindestens 30 Gew.-% enthält, bedeutet.

$R^1$, $R^2$ und $R^3$ stehen für je einen Alkylrest mit 1 bis 10 C-Atomen, wobei die Summe aller C-Atome in den Substituenten 6 bis 20, bevorzugt 7 bis 14 C-Atomen beträgt. Als Beispiel für Säuren, aus denen sich der Carboxylrest $R^1R^2R^3CCO_2$- ableitet, seien folgende Carbonsäuren genannt:

2-Methyl-2-äthyl-pentansäure
2,2-Diäthyl-pentansäure
2,2-Dimethyl-hexansäure
2-Methyl-2-äthyl-hexansäure
2,2-Diäthyl-hexansäure
2-Äthyl-2-propyl-hexansäure
2-Äthyl-2-butyl-heptansäure
2,2-Diäthyl-heptansäure
2,2-Diäthyl-octansäure
2-Methyl-2-butyl-octansäure

Als Carboxylate der Komponente A geeignet sind auch Gemische obiger Carbonsäuren. Beispiele für geeignete Carboxylate der Seltenen Erden sind:

Lanthan-tris-(2,2-diäthyl-hexanoat)
Praseodym-tris(2,2-diäthyl-hexanoat)
Neodym-tris(2,2-diäthyl-hexanoat)
Lanthan-tris(2,2-diäthyl-heptanoat)
Praseodym-tris(2,2-diäthyl-heptanoat)
Neodym-tris(2,2-diäthyl-heptanoat)
Lanthanversaticat (Lanthansalz der Versatic-Säure, Handelsprodukt der Shell Chemie)

Praseodymversaticat
Noedymversaticat
Bei der Versaticsäure handelt es sich um ein Gemisch stark verzweigter Carbonsäuren mit 9-11 C-Atomen (Ullmann, Enzyclopädie der technischen Chemie, Band 9, 4. Auflage, Seite 143, Kapitel 6.1.4.1., 2. Abschnitt).

In den Formeln $AlR_3^4$ bzw. $R_2AlH$ der Komponente B bedeutet $R^4$ einen geradkettigen oder verzweigten Alkylrest mit 1 bis 10 C-Atomen.

Beispiele für geeignete Aluminiumalkyle sind:
Trimethylaluminium,
Triäthylaluminium,
Tri-n-propylaluminium,
Triisopropylaluminium,
Tri-n-butylaluminium,
Triisobutylaluminium,
Tripentylaluminium,
Trihexylaluminium,
Tricyclohexylaluminium,
Trioctylaluminium,
Diäthylaluminiumhydrid,
Di-n-butylaluminiumhydrid,
Di-iso-butylaluminiumhydrid.

Bevorzugt werden Triäthylaluminium, Triisobutylaluminium und Diisobutylaluminiumhydrid.

Besonders bevorzugt wird Triäthylaluminium.

Als Komponente C werden sogenannte Lewis-Säuren eingesetzt.

Beispielhaft seien die Organometallhalogenide erwähnt, in denen das Metallatom der Gruppe 3a) oder 4a) angehört sowie Halogenide der Elemente der 3a), 4a) und 5a) des Periodensystems, wie es im "Handbook of Chemistry and Physics", 45th Edition 1964-65 dargestellt ist:
Methylaluminiumdibromid,
Methylaluminiumdichlorid,
Äthylaluminiumdibromid,
Äthylaluminiumdichlorid,
Butylaluminiumdibromid,
Butylaluminiumdichlorid,
Dimethylaluminiumbromid,
Dimethylaluminiumchlorid,
Diäthylaluminiumbromid,
Diäthylaluminiumchlorid,
Dibutylaluminiumbromid,
Dibutylaluminiumchlorid,
Methylaluminiumsesquibromid,
Methylaluminiumsesquichlorid,
Äthylaluminiumsesquibromid,
Äthylaluminiumsesquichlorid,
Dibutylzinndichlorid,
Aluminiumtribromid,
Antimontrichlorid,
Antimonpentachlorid,
Phosphortrichlorid,
Phosphorpentachlorid,
Zinntetrachlorid.

Bevorzugt werden Diäthylaluminiumchlorid, Äthylaluminiumsesquichlorid, Äthylaluminiumdichlorid, Diäthylaluminiumbromid, Äthylaluminiumsesquibromid und Äthylaluminiumdibromid.

Als Komponente C können auch die Reaktionsprodukte von Alkylaluminiumverbindungen mit Halogenen. z. B. Triäthylaluminium und Brom eingesetzt werden.

Das Molverhältnis, in dem die Katalysatorkomponenten angewendet werden, kann in weiten Grenzen variiert werden.

Das Molverhältnis der Komponente A zur Komponente B beträgt 1 : 1 bis 1 : 100, bevorzugt 1 : 3 bis 1 : 80 und besonders bevorzugt 1 : 3 bis 1 : 50. Das Molverhältnis der Komponente A zur Komponente C beträgt 1 : 0,4 bis 1 : 15, bevorzugt 1 : 0,5 bis 1 : 8.

Ein weiterer Gegenstand der Erfindung ist ein Herstellungsverfahren für den Katalysator. Dieser wird hergestellt, indem man die Lösungen der Komponenten A, B und C in beliebiger Reihenfolge unter Rühren, zum Polymerisationsansatz gibt.

Geeignete Lösungsmittel sind z. B. aromatische, aliphatische und cycloaliphatische Kohlenwasserstoffe wie Benzol, Toluol, Pentan, n-Hexan, iso-Hexan, Heptan und Cyclohexan sowie deren Gemische.

Die Temperatur, bei der die Herstellung des Katalysators erfolgt, wird in der Regel von der Schmelz- bzw. Siedetemperatur des verwendeten Lösungsmittels begrenzt. Geeignet sind z. B. Temperaturen zwischen - 30

und + 80°C. Die Herstellung des Katalysators erfolgt durch Zugabe und Mischen der Katalysatorkomponenten A, B und C zum Polymerisationsansatz. Die Komponenten A und B oder B und C können auch vor Zugabe zum Polymerisationsansatz gemischt werden. Es ist dabei nicht wesentlich, ob das zu polymerisierende Dien vor oder nach den Katalysatorkomponenten zugefügt wird, oder ob das Dien Zwischen der Zugabe von zwei Katalysatorkomponenten zugefügt wird. Geeignete Reihenfolgen bei der Herstellung des Katalysators durch Einmischen der Komponenten in den Polymerisationsansatz sind z. B:

1. Lösungsmittel,
2. Dien,
3. Komponente A,
4. Komponente B,
5. Komponente C oder

1. Lösungsmittel,
2. Komponente A,
3. Komponente B,
4. Komponente C,
5. Dien oder

1. Lösungsmittel,
2. Komponente B,
3. Komponente C,
4. Komponente A,
5. Dien.

Die Katalysatorkomponenten A, B und C können auch gleichzeitig zum Lösungsmittel-Monomer-Gemisch gegeben werden.

Der Katalysator besitzt eine hohe Aktivität, und es genügen daher sehr geringe Mengen, um eine katalytische Wirkung zu erzielen. Auf 100 g Monomere werden im allgemeinen 0,01 bis 0,5 mMol des Katalysators, bezogen auf die Komponente A, eingesetzt.

Ein weiterer Gegenstand der Erfindung ist die Verwendung des erfindungsgemäßen Katalysators zur Lösungspolymerisation von konjugierten Dienen.

Geeignete Diene sind z. B. Butadien, Isopren, Pentadien und 2,3-Dimethylbutadien. Der Katalysator eignet sich sowohl für die Homopolymerisation als auch die Copolymerisation derartiger Diene.

Die Polymerisation der Diene wird in organischen Lösungsmitteln ausgeführt. Diese Lösungsmittel müssen inert gegenüber dem verwendeten Katalysatorsystem sein. Geeignet sind z. B. aromatische, aliphatische und cycloaliphatische Kohlenwasserstoffe wie Benzol, Toluol, Pentan, n-Hexan, iso-Hexan, Heptan und Cyclohexan.

Die Polymerisation mit dem erfindungsgemäßen Katalysator kann sowohl kontinuierlich als auch diskontinuierlich durchgeführt werden.

Die Polymerisation wird bei einer Temperatur zwischen - 20 und 150°C, bevorzugt zwischen 0 und 120°C, durchgeführt.

In einer üblichen Ausführungsform werden die Komponenten A, B und C einer Mischung von 100 Gew.-Teilen Lösungsmittel mit 5 bis 40 Gew.-Teilen, bevorzugt 8 bis 20 Gew.-Teilen Butadien zugesetzt. Die Polymerisation springt, erkennbar an der Wärmeentwicklung, sofort an. Bei einer Katalysatordosierung von 0,06 mMol, bezogen auf die Komponente A und einer Temperatur von ca. 90°C erreicht man nach 30 Minuten bis 5 Stunden Umsätze von mehr als 90 %.

Nach Erreichen des gewünschten Umsatzes wird der Katalysator durch Zusatz geringer Mengen beispielsweise an Wasser, Carbonsäuren oder Alkoholen desaktiviert.

Der Polymerlösung können vor der Aufarbeitung übliche Stabilisatoren in üblichen Mengen zugesetzt werden. Als Stabilisatoren werden z. B. sterisch gehinderte Phenole oder aromatische Amine wie z. B. 2,6-Di-tert.-butyl-4-methyl-phenol verwendet.

Die Isolierung der Polymeren erfolgt durch Eindampfen der Polymerlösung, durch Fällen mit einem Nichtlösungsmittel wie beispielsweise Methanol, Äthanol, Aceton oder, bevorzugt, durch Wasserdampfdestillation des Lösungsmittels. Die Trocknung erfolgt nach den üblichen Verfahren, z. B. im Trockenschrank oder in einem Schneckentrockner.

Das erfindungsgemäß hergestellte Polybutadien weist beispielsweise einen Anteil an cis 1,4-Doppelbindungen von 80 bis 99 % auf. Es zeigt gegenüber den bekannten Handelsprodukten deutlich verbesserte Konfektionsklebrigkeit. Bevorzugte Einsatzgebiete sind Autoreifen und technische Gummiartikel.

Die Erfindung wird anhand der folgenden Beispiele näher erläutert. Wenn nicht anders angegeben, beziehen sich die Prozentangaben auf Gewichtsprozent.

**Beispiel 1**

Ein mit $N_2$-gespültes Rührgefäß von 40 l Rauminhalt wurde bei 40°C in folgender Weise beschickt:

1. 25 l Cyclohexan,
2. 2,6 kg Butadien,
3. 2,0 mMol Neodymversaticat, gelöst in 50 ml Cyclohexan,
4. 80 mMol Triäthylaluminium, gelöst in 50 ml Cyclohexan,
und
5. 2,0 mMol Äthylaluminiumsesquichlorid, gelöst in 50 ml Cyclohexan.

Der Reaktor war von einem Mantel umgeben, durch den Wasser mit einer Temperatur zwischen 15 und 90°C geleitet werden konnte. Damit wurde der Polymerisationsansatz auf 75°C aufgeheizt und bei dieser Temperatur belassen.

Nach 3 Stunden wurde die Reaktion durch Zugabe von Äthanol abgestoppt. Nach Zusatz von 0,3 % 2,6-Di-tert.-butyl-4-methylphenol (bezogen auf festes Polymeres) als Stabilisator wurde das Polybutadien durch Entfernen des Cyclohexans mittels einer Wasserdampfdestillation gewonnen.

Das Polymere wurde bei 50°C im Vakuum getrocknet. Die Ausbeute betrug 98 %, bezogen auf das eingesetzte Monomere.

IR-Analyse: 1,4 cis = 95,3 %; 1,4 trans = 4,1 %; 1,2 = 0,6 %.

**Beispiel 2**

Es wurde eine Glasflasche von 500 ml Inhalt unter Ausschluß von Luft und Feuchtigkeit mit den folgenden Substanzen
1. 290 ml Cyclohexan
2. 40 g Isopren
3. 0,6 mMol $Al(C_2H_5)_3$
4. 0,2 mMol $(C_2H_5)_2AlBr$
5. 0,08 mMolNd $vers_3$

Es wurde 2 1/2 Stunden bei 60°C polymerisiert. Es wurden 39,6 g (99 %) des festen Polymeren isoliert. Danach wurde die Flasche entkorkt und das Polymerisat mit 0,5 l Ethanol, dem eine kleine Menge eines Antioxidationsmittels zugesetzt war, ausgefällt. Das erhaltene Polyisopren wurde bei 50°C bis zur Gewichtskonstanz getrocknet.

**Beispiele 3-7**

Es wurde ein Glasflasche in folgender Reihenfolge beschickt:
1. 290 ml Cyclohexan
2. Butadien
3. Komponente B
4. Komponente C
5. Komponente A.

In Beispiel 6 wurde als Komponente C das Umsetzungsprodukt von $Al(C_2H_5)_3$, gelöst in Cyclohexan, mit Brom eingesetzt.

In Beispiel 7 wurde als Komponente A Didymversaticat ($Divers_3$) eingesetzt. Didym (Di) steht dabei für ein Gemisch von Elementen der Seltenen Erden der Zusammensetzung 72 % Neodym, 20 % Lanthan und 8 % Praseodym.

Die Aufarbeitung erfolgte wie in Beispiel 2 beschrieben. Die Polymerisationsbedingungen und die Ergebnisse sind in Tabelle 1 zusammengestellt.

**Tabelle 1**

| Beispiel | Butadien g | Komponente B mMol | Komponente C mMol | Komponente A mMol | Temperatur °C | Zeit Stdn. | Ausbeute % | cis-1,4 % |
|---|---|---|---|---|---|---|---|---|
| 3 | 25,1 | $Al(C_2H_5)_3$ 0,25 | $(C_2H_5)_3Al_2Cl_3$ 0,05 | $Nd(vers)_3$ 0,05 | 60 | 2 | 87,3 | 96,9 |
| 4 | 25,0 | $Al(C_2H_5)_3$ 0,15 $(i\text{-}C_4H_9)_2AlH$ 0,1 | $(C_2H_5)_3Al_2Cl_3$ 0,06 | $Nd(vers)_3$ 0,05 | 60 | 2 | 69,6 | 98,6 |
| 5 | 32,2 | $Al(C_2H_5)_3$ 0,35 | $(C_2H_5)_3AlCl_3$ 0,035 | $Nd(vers)_3$ 0,035 | 60 | 2 | 93,0 | 94,6 |
| 6 | 27,5 | $Al(C_2H_5)_3$ 0,27 | $Al(C_2H_5)_3 + Br_2$ 0,125 | $Nd(vers)_3$ 0,05 | 60 | 2 | 99,0 | 95,6 |
| 7 | 25,5 | $Al(C_2H_5)_3$ 0,52 | $(C_2H_5)_3Al_2Br_3$ 0,012 | $Di(vers)_3$ 0,015 | 60 | 2 | 96,8 | 92,4 |

**Beispiel 8**

Es wurden Butadien und Isopren copolymerisiert. Die Glasflasche wurde in folgender Reihenfolge beschickt:

1. 290 ml Cyclohexan
2. 19,6 g Isopren
3. 19,4 g Butadien
4. 0,45 mMol $Al(C_2H_5)_3$
5. dem Umsetzungsprodukt von 0,15 mMol $Al(C_2H_5)_3$, gelöst in 2 ml Cyclohexan und 0,15 mMol $Br_2$
6. 0,06 mMol Neodymversaticat.

Es wurde 2 1/2 Stunden bei 60°C polymerisiert. Die Aufarbeitung erfolgte wie in Beispiel 2 beschrieben. Die Ausbeute betrug 83 %.

**Patentansprüche**

1. In Lösungsmitteln für eine Dienpolymerisation homogen löslicher Katalysator erhalten durch Zugabe und Mischen der Katalysatorbestandteile zum Polymerisationsansatz, bestehend aus:

A. einem Carboxylat der Seltenen Erde der Formel

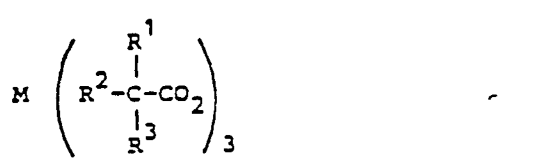

(1)

B. einem Aluminiumalkyl $AlR_3^4$ und/oder $R_2^4AlH$

C. einer weiteren Lewissäure,

wobei in den Formeln

M ein dreiwertiges Element der Seltenen Erden mit den Ordnungszahlen 57 bis 71.

$R^1$, $R^2$ und $R^3$ gleich oder verschieden Alkylreste mit 1 bis 10 Kohlenstoffatomen, wobei die Summe aller C-Atome in den Substituenten 6 bis 20 beträgt, und

$R^4$ einen Alkylrest mit 1 bis 10 Kohlenstoffatomen bedeuteten,

mit der Ausnahme eines Katalysators, der ein Umsetzungsprodukt der Komponente A der Formel 1, wobei die Summe aller C-Atome in den Substituenten 5 bis 19 beträgt, mit einer Teilmenge der Komponente B enthält, wenn B die Bedeutung Aluminium-Trialkyl hat.

2. Katalysator gemäß Anspruch 1, dadurch gekennzeichnet, daß M Lanthan, Cer, Praseodym oder Neodym darstellt.

3. Katalysator gemäß Anspruch 1, dadurch gekennzeichnet, daß M ein Gemisch von Elementen der Seltenen Erden, welches mindestens eines der Elemente Lanthan, Cer, Praseodym oder Neodym zu wenigstens 10 % enthält, darstellt.

4. Katalysator gemäß Anspruch 1, dadurch gekennzeichnet, daß M ein Gemisch von Elementen der Seltenen Erden, welches Lanthan oder Neodym zu wenigstens 30 % enthält, darstellt.

5. Katalysator gemäß Ansprüchen 1 bis 4, dadurch gekennzeichnet, daß $R^4$ Äthyl oder iso-Butyl darstellt.

6. Katalysator gemäß Ansprüchen 1 bis 5, dadurch gakennzeichnet, daß die Lewissäure Diäthylaluminiumchlorid, Äthylaluminiumsesquichlorid, Äthylaluminiumdichlorid, Diäthylaluminiumbromid, Äthylaluminiumsesquibromid oder Äthylaluminiumbromid darstellt.

7. Katalysator gemäß Ansprüchen 1 bis 6, dadurch gekennzeichnet, daß das Molverhältnis der Komponente A zur Komponente B 1 : 1 bis 1 : 100 beträgt.

8. Katalysator gemäß Ansprüchen 1 bis 7, dadurch gekennzeichnet, daß das Molverhältnis der Komponente C zur Komponente A von 0,4 : 1 bis 15 :1 beträgt.

9. Verfahren zur Polymerisation von konjugierten Dienen in homogener Lösung, dadurch gekennzeichnet, daß ein Katalysator gemäß Ansprüchan 1 bis 8 verwendet wird.

10. Verfahren zur Herstellung eines Katalysators gemäß Ansprüchen 1 bis 8, dadurch gekennzeichnet, daß man

a) ein Carboxylat der Seltenen Erden der Formel

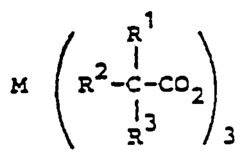

b) ein Aluminiumalkyl $AlR_3^4$ und/oder $R_2^4$ AlH

c) eine Lewissäure

in einem inerten organischen Lösungsmittel bei Temperaturen von - 30 bis 80°C in beliebiger Reihenfolge dem Polymerisationsansatz zufügt.

## Claims

1. A catalyst which is homogeneously soluble in solvents for the polymerisation of dienes, obtained by adding the catalyst constituents to the polymerisation mixture and mixing them therewith, consisting of:

A) a rare earth carboxylate of the formula

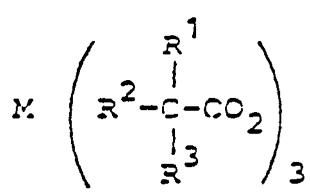

(1)

B) an alumumium alkyl $AlR_3^4$ and/or $R_2^4AlH$ and

C) a further Lewis acid,

wherein in the formulae

M denotes a trivalent rare earth element having an atomic number of from 57 to 71,

$R^1$, $R^2$ and $R^3$ are identical or different and denote alkyl radicals with 1 to 10 carbon atoms, the sum of all the C atoms in the substituents being from 6 to 20, and

$R^4$ denotes an alkyl radical with 1 to 10 carbon atoms,

with the exception of a catalyst which contains a reaction product of component A of the formula 1, wherein the sum of all the C atoms in the substituents is from 6 ro 19, with a portion of component B, when B has the meaning aluminium trialkyl.

2. A catalyst according to Claim 1, characterised in that M represents lanthanum, cerium, praseodymium or neodymium.

3. A catalyst according to Claim 1, characterised in that M represents a mixture of rare earth elements containing at least 10 % of at least one of the elements lanthanum, cerium, praseodymium or neodymium.

4. A catalyst according to Claim 1, characterised in that M represents a mixture of rare earth elements containing at least 30 % of lanthanum or neodymium.

5. A catalyst according to Claims 1 to 4, characterised in that $R^4$ represents ethyl or isobutyl.

6. A catalyst according to Claims 1 to 5, characterised in that the Lewis acid is diethyl aluminium chloride, ethyl aluminium sesquichloride, ethyl aluminium dichloride, diethyl aluminium bromide, ethyl aluminum sesquibromide or ethyl aluminium bromide.

7. A catalyst according to Claims 1 to 6, characterised in that the molar ratio of component A to component B is 1 : 1 to 1 : 100.

8. A catalyst according to Claims 1 to 7, characterised in that the molar ratio of component C to component A is from 0.4 : 1 to 15 : 1.

9. A process for the polymerisation of conjugated dienes in homogeneous solution, characterised in that a catalyst according to Claims 1 to 8 is used.

10. A process for the preparation of a catalyst according to Claims 1 to 8, characterised in that

a) a rare earth carboxylate of the formula

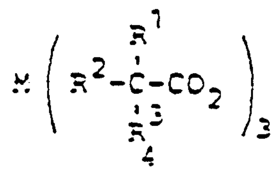

,

b) an aluminium alkyl $AlR_3^4$ and/or $R_2^4AlH$ and

c) a Lewis acid

in an inert organic solvent are added to the polymerisation mixture in any sequence at temperatures of -30 to 80° C.

**Revendications**

1. Catalyseur soluble de façon homogène dans les solvants appropriés pour la polymérisation des diènes, obtenu par ajout et mélange des constituants catalytiques à la charge de polymérisation, comprenant:

A) un carboxylate de terres rares de formule:

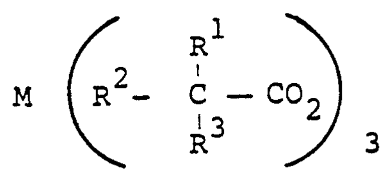

(1)

B) un composé d'aluminium-alkyle $AlR_3^4$ et/ou $R_2^4AlH$,

C) un autre acide de Lewis,

où

M représente un élément trivalent de terres rares portant les numéros d'ordre 57 à 71,

$R^1$, $R^2$ et $R^3$ sont identiques ou différents et représentent chacun un groupe alkyle contenant 1 à 10 atomes de carbone, la somme de tous les atomes de carbone des substituants étant de 6 à 20, et

$R^4$ représente un groupe alkyle contenant 1 à 10 atomes de carbone,

à l'exception d'un catalyseur qui contient un produit réactionnel du composant A de formule 1, la somme de tous les atomes de carbone des substituants étant de 6 à 19, avec une quantité partielle du composant B, lorsque B représente un composé d'aluminium-trialkyle.

2. Catalyseur suivant la revendication 1, caractérisé en ce que M représente le lanthane, le cérium, le praséodyme ou le néodyme.

3. Catalyseur suivant la revéndication 1, caractérisé en ce que M représente un mélange d'éléments de terres rares contenant au moins un élément choisi parmi le lanthane, le cérium, le praséodyme et le néodyme à raison d'au moins 10 %.

4. Catalyseur suivant la revendication 1, caractérisé en ce que M représente un mélange d'éléments de terres rares contenant du lanthane ou du néodyme à raison d'au moins 30 %.

5. Catalyseur suivant les revendications 1 à 4, caractérisé en ce que $R^4$ représente un groupe éthyle ou un groupe isobutyle.

6. Catalyseur suivant les revendications 1 à 5, caractérisé en ce que l'acide de Lewis est le chlorure de diéthylaluminium, le sesquichlorure d'éthylaluminium, le dichlorure d'éthylaluminium, le bromure de diéthylaluminium, le sesquibromure d'éthylaluminium ou le bromure d'éthyl-aluminium.

7. Catalyseur suivant les revendications 1 à 6, caractérisé en ce que le rapport molaire du composant A vis-à-vis du composant B est de 1 : 1 à 1 : 100.

8. Catalyseur suivant les revendications 1 à 7, caractérisé en ce que le rapport molaire entre le composant C et le composant A est de 0,4 : 1 à 15 : 1.

9. Procédé de polymérisation de diènes conjugués en solution homogène, caractérisé en ce qu'on utilise un catalyseur suivant les revendications 1 à 8.

10. Procédé de préparation d'un catalyseur suivant les revendications 1 à 8, caracterisé en ce qu'on ajoute à

la charge de polymérisation:

a) un carboxylate de terres rares de formule:

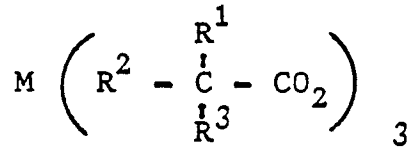

b) un composé d'aluminium-alkyle $AlR_3^4$ et/ou $R_2^4AlH$

c) un acide de Lewis

dans un solvant organique inerte à des températures comprises entre -30 et +80°C dans n'importe quel ordre.